# EUROPEAN PATENT SPECIFICATION

(11) **EP 0 957 305 B1**
(45) Date of publication and mention of the grant of the patent: **27.08.2003**
(21) Application number: 99108876.6
(22) Date of filing: 05.05.1999
(51) Int. Cl.: F16L 41/10, F16L 37/084

(54) **A pneumatic connector**
Pneumatischer Verbinder
Connecteur pneumatique

(30) Priority: 06.05.1998 IT BO980286; 30.07.1998 IT BO980469
(43) Date of publication of application: 17.11.1999
(73) Proprietor: SISTEM PNEUMATICA S.r.l., 40132 Bologna (IT)
(72) Inventor: Landi, Enzo, 40068 San Lazzaro de Savena (IT); Gamberini, Giovanni, 40132 Bologna (IT)
(74) Representative: Jorio, Paolo

(56) References cited:
- EP-A- 0 061 752
- EP-A- 0 152 617
- EP-A- 0 552 674
- US-A- 5 433 489

## Description

The present invention relates to a pneumatic connector with an improved sealing system.

Various sealing systems are known in the art for use between a pneumatic seal and a seat into which it is screwed. A first system provides for an annular groove to be formed in the threaded portion of the said body and for a sealing ring to be arranged in the said groove and deformed by the thread formed in the seat as the connector is screwed in. The main disadvantage encountered with the said first system consists in the extreme ease with which the sealing ring can break, especially after screwing the connector in and out a few times.

A second system, on the other hand, provides for an annular notch in the connector, immediately above the threaded portion thereof, for the said seat to have a frusto-conical portion immediately ahead of the threaded portion and for a sealing ring with a cross section substantially matching that of the annular groove to be fitted therein. This second arrangement also has some disadvantages, however, such as the cost of manufacturing a sealing ring with a special cross section and the possibility that the sealing ring could slip out of its position between the bottom of the groove and the frusto-conical portion of the seat while being deformed when the connector is screwed in. A further disadvantage of this type of seal consists in the fact that it is not possible to adjust how tightly the connector is screwed in to ensure a correct and effective seal.

Document US-A-5 433 489 describes a sealing system according to the preamble portion of the present Claim 1.

The main object of the present invention is thus to provide a connector for fluid-dynamic circuits with a sealing system free of the aforesaid disadvantages.

This object is achieved according to claim 1.

The present invention will now be described with reference to the appended drawings, which illustrate a preferred embodiment by way of non-limitative example, in which
Figure 1 shows a sealing system for a fluid-dynamic circuit of the present invention;
Figures 2 to 4 are views illustrating the assembly procedure of the sealing system shown in Figure 1;
Figure 5 is a partial view, on an enlarged scale, of a portion of the sealing system of Figure 1;
Figure 6 is a view of the sealing system of Figure 1 with a first detail shaped differently; and
Figure 7 is a partially sectioned view of the sealing system of Figure 1 with a second detail shaped differently.

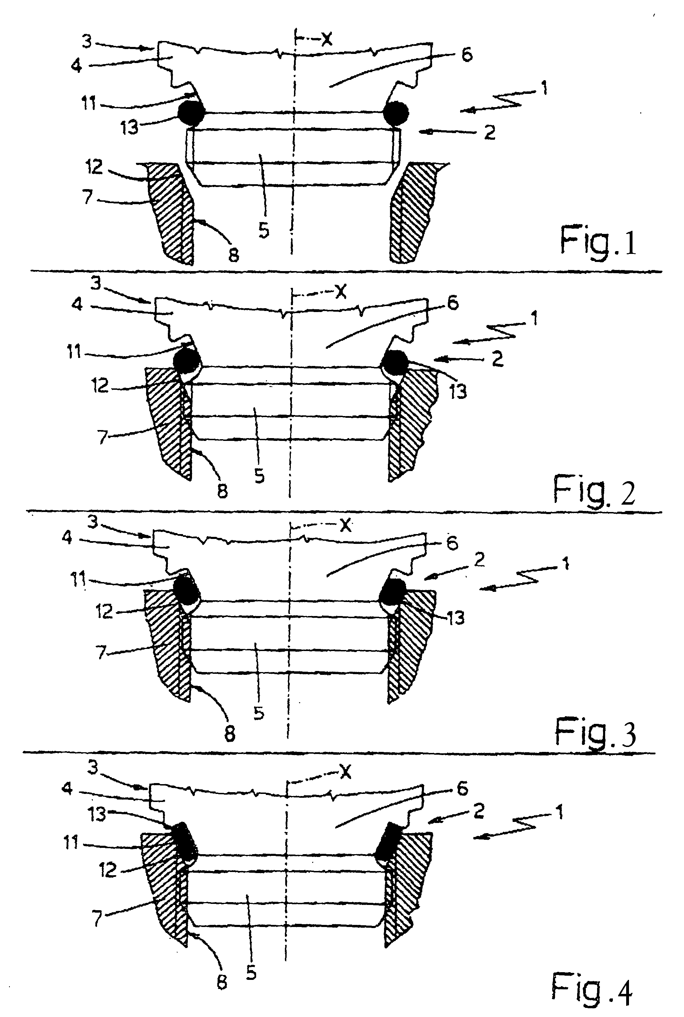

With particular reference to Figures 1 to 5, a connector for a fluid-dynamic circuit (the circuit not illustrated) is generally indicated as 1 and has an improved sealing system 2. The connector 1 includes a main body 3 having, along a longitudinal axis X, a substantially cylindrical upper portion 4, a threaded, cylindrical lower portion 5, with a smaller diameter than that of the upper portion 4, and a central portion 6 connecting the portions 4 and 5. The connector 1 may be screwed into a seat 7 (partly shown in Figures 1-4, 6, 7) having a thread 8 into which the threaded portion 5 of the main body 3 of the connector 1 is to be screwed.

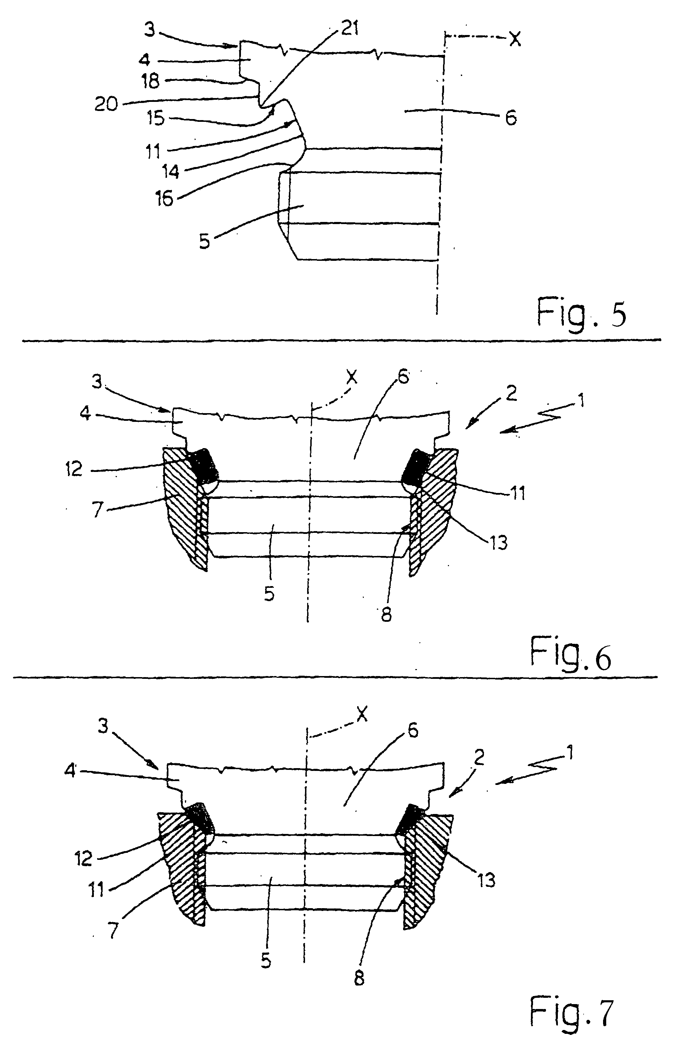

The sealing system 2 includes an annular groove 11 formed in the portion 6 of the main body 3, a flared portion 12 at the longitudinal end of the seat 7 facing the body 3, and a sealing ring 13 arranged in the groove 11 and compressible between the flared portion 12 and the bottom wall 14 (Figure 5) of the groove 11. The angle defined between the flared portion 12 and a plane orthogonal to the axis X is preferably 60°. The sealing ring 13 can advantageously be an ordinary circular section "O-ring".

With reference to Figure 5, the groove 11 is defined by a lateral wall 15, by the bottom wall 14 and by a lateral wall 16 near the portion 5. The portion 6 has a section defined successively by a first annular wall 18, the cross section of which lies in a plane convergent with the axis X towards the portion 5, and by a second annular wall 20, the cross section of which lies in a plane substantially parallel to the axis X. It should also be noted that the diameter of the wall 20 is in any case greater than the diameter of the seat 7, while the walls 15 and 16 define an annular tooth 21 (Figures 5-7).

With reference to Figure 5, the cross section of the wall 15 lies in a plane convergent with the axis X towards the portion 6, the cross section of the wall 14 is substantially orthogonal to the wall 15 and lies in a plane convergent with the axis X towards the portion 5, and the wall 16 is defined in section in a plane convergent with the axis X in that it joins the connection region of minimum diameter or the wall 14 with the portion. 5. The diameter of the seat 7 is smaller than the minimum diameter of the wall 15 and smaller than the maximum diameter of the wall 14, and is greater than the minimum diameter of the wall 14. The bottom wall 14 of the annular groove 11 is preferably parallel to the annular wall defined by the flared portion 12 of the seat 7. The plane in which the cross section of the wall 14 lies preferably defines an angle of between 20° and 30°, and in particular an angle of 25° with the axis X. The angle between the wall 15 and the wall 14 is preferably between 80° and 90°, in particular of 85°. The angle between the wall 16 and the axis X is preferably 60°. Finally, the angle between the wall 15 and the axis X is preferably between 25° and 35°, in particular 30°.

It should also be pointed out that the diameter of the cross section of the sealing ring 13 is smaller than the distance between the lateral walls 15 and 16 of the groove 11 and is greater than the depth of the said groove. The comer defined by the walls 20 and 15, that is the point of the tooth 21, is on a circumference with a diameter greater than the maximum diameter of the flared portion 12.

With reference to Figures 1 to 4, the sealing ring 13 is in use first arranged in the groove 11 and then the portion 5 is screwed into the seat 7. While it is being screwed in, the sealing ring 13 is compressed between the flared portion 12 and the bottom wall 14 of the groove 11. The tighter the portion 5 is screwed, the smaller is the distance between the wall 14 and the wall defined by the flared portion 12 and the greater, as a result, is the pressure exerted on the sealing ring 13. Furthermore, the sealing ring 13 tends to rise back up the groove 11 towards the wall 15, which acts as a stop against this upward movement.

The advantages offered by the present invention are evident from the above description.

In particular, the system 2 used in the connector 1 provides an effective and accurate fluid-dynamic seal between the body 3 and the seat 7. In addition, it is possible to adjust the seal in dependence on how tight the two are screwed together. It should also be pointed out that the tooth 21 prevents the sealing ring from sliding out of the groove 11 at all. In addition, the overall seal of the system 2 is increased since the sealing ring 13 also exerts pressure on the wall 15. It should finally be emphasized that the system 2 uses an ordinary "O-ring", which is both easy to find-and inexpensive, as the sealing ring.

Unlike the prior art sealing systems described earlier, the system 2 does not deform the sealing ring 13 with sections of threading which cause uneven deformation and over time create cracks leading to the rupture of the sealing ring 13. The system 2 provides on the other hand, as seen in figure 4, for deformation to be evenly distributed between the two smooth walls. As a result, the system 2 is subject to less wear and thus lasts longer, even if the connector 1 is screwed on and off repeatedly.

With reference to Figure 6, the flared portion 12 could be longer, and could have a maximum diameter greater than the diameter of the circumference defined by the point of the tooth 21, which could thus come into contact, should the portion 5 be screwed hard into the thread 8, with the flared portion 12. In this case again, as shown in Figure 6, the system 2 provides a perfect seal since it has adapted itself, so to speak, to the new situation.

With reference to Figure 7, the angle defined between the flared portion 12 and a plane orthogonal to the axis X could be 45°. In this case, once the connector 1 has been assembled, the sealing ring 13 becomes substantially triangular in cross section. In this case as well, the flared portion 12 could be long, whereby the point of the tooth 21 would come into contact with the flared portion 12 itself.

## Claims

1. A sealing system (2) for a fluid-dynamic circuit, sealing system (2) interposed between a main body (3) having a substantially cylindrical upper portion (4), a threaded lower portion (5) and a central portion (6) connecting between the said upper and lower portion (4 and 5), and a seat (7) with threading (8) into which the said lower portion (5) of the said main body (3) is screwed; the said sealing system (2) including an annular groove (11), a flared portion (12) at the longitudinal end of the said seat (7) facing the said main body (3), and a sealing ring (13) arranged in the said groove (11) and compressible between the said flared portion (12) and the bottom (14) of the said groove (11); wherein said sealing system (2) includes a tooth (21) which prevents the said sealing ring (13) from slipping out of the said groove (11) during the screwing in operation an inner surface (15) of the said tooth (21) acting as stop for the sealing ring (13) which has a circular section, sealing system (2) **characterised ;**
**in that** the diameter of the section of the said sealing ring (13) is smaller than the distance between the said lateral walls (15 and 16) of the said groove (11) and is greater than the depth of the said groove (11);
and **in that** said sealing ring (13) tends to move up in the said groove (11) towards the said inner surface (15) while the lower portion (5) is screwed into the said.seat (7).

2. A sealing system (2) according to Claim 1, **characterised in that** the said flared portion (12) is at an angle of 45°-60° to a plane orthogonal to the said axis (X).

3. A sealing system (2) according to any preceding Claim, **characterised in that** the said groove (11) is defined by a first lateral wall (15) close to the said upper portion (4), which delimits the said tooth (21), the said bottom wall (14) and a second lateral wall (16) close to the said lower portion (5); the said first lateral wall (15), in section, lying in a plane convergent with the said axis (X) towards the upper portion (4), the said bottom wall (14), in section, being substantially orthogonal to the said first lateral wall (15) and lying in a plane convergent with the said axis (X) towards the said lower portion (5), and the said second lateral wall (16) being defined, in section in a plane convergent with the said axis (X) towards the said upper portion (4) **in that** it connects the region of minimum diameter of the said bottom wall (14) with the said lower portion (5).

4. A sealing system (2) according to Claim 3, **characterised in that** the plane in which the said bottom wall (14) lies, in section, defines an angle of between 20° and 30° with the said axis (X).

5. A sealing system (2) according to Claim 3, **characterised in that** the plane in which the said first lateral wall (15) of the said groove (11) lies, defines an angle of between 25° and 35°, and preferably 35° with the axis (X).

6. A sealing system (2) according to Claim 3, **characterised in that** the angle defined between the said first lateral wall (15) of the said groove (11) and the said bottom wall (14) is between 80° and 90°, preferably 85°.

7. A sealing system (2) according to any one of the preceding claims, **characterised in that** the said central portion (6) has an area defined in succession by a first annular wall (18) which, in section, lies in a plane convergent with the said axis (X) towards the said lower portion (5), and by a second annular wall (20) which, in section, lies in a plane parallel to the said axis (X) and defines the said tooth (21) with the first lateral wall (15) of the said groove (11); the diameter of the circumference on which the tip of the said tooth (21) lies being greater than the diameter of the seat (7).

8. A sealing system (2) according to Claim 7, **characterised in that** the tip of the said tooth (21) lies on a circumference having a diameter greater than the maximum diameter of the said flared portion (12).

9. A sealing system (2) according to Claim 7, **characterised in that** the tip of the said tooth (21) lies on a circumference having a diameter smaller than the maximum diameter of the said flared portion (12).

## Patentansprüche

1. Dichtungssystem (2) für einen fluid-dynamischen Kreis, wobei das Dichtungssystem (2) eingesetzt ist zwischen einem Hauptkörper (3) mit einem im wesentlichen zylindrischen oberen Abschnitt (4), einem mit Gewinde versehenen unteren Abschnitt (5) und einem Mittelabschnitt (6), der die Verbindung zwischen dem oberen Abschnitt (4) und unterem Abschnitt (5) herstellt, und einem Sitz (7) mit Gewinde (8), in welches der untere Abschnitt (5) des Hauptkörpers (3) eingeschraubt wird, wobei das Dichtungssystem (2) eine Ringnut (11), einen konisch erweiterten Abschnitt (12) an dem Längsende des Sitzes (7) gegenüber dem Hauptkörper (3) aufweist und ein Dichtungsring (13) in der Nut (11) angeordnet und zwischen dem konisch erweiterten Abschnitt (12) und dem Boden (14) der Nut (11) zusammen drückbar ist, wobei das Dichtungssystem (2) einen Zahn (21) aufweist, der das Herausgleiten des Dichtungsringes (13) aus der Nut (11) während des Einschraubens verhindert und eine Innenfläche (15) des Zahns (21) als ein Stop für den einen kreisförmigen Querschnitt aufweisenden Dichtungsring (13) wirkt und das Dichtungssystem (2) **dadurch gekennzeichnet ist, daß** der Durchmesser des Querschnitts des Dichtungsringes (13) kleiner als der Abstand zwischen den Seitenwänden (15 und 16) der Nut (11) und größer als die Tiefe der Nut (11) ist und das der Dichtungsring (13) bestrebt ist, sich in der Nut (11) in Richtung auf die Innenfläche (15) nach oben zu bewegen, während der untere Abschnitt (5) in den Sitz (7) eingeschraubt wird.

2. Dichtungssystem (2) nach Anspruch 1, **dadurch gekennzeichnet, daß** der konisch erweiterte Abschnitt (12) einen Winkel von 45° bis 60° mit einer zur Achse (X) senkrechten Ebene bildet.

3. Dichtungssystem (2) nach einem der vorhergehenden Ansprüche, **dadurch gekennzeichnet, daß** die Nut (11) definiert ist durch eine nahe bei dem oberen Abschnitt (5) liegende erste Seitenwand (15), welche den Zahn (21) begrenzt, die Bodenwand (14) und eine zweite Seitenwand (16) nahe bei dem unteren Abschnitt (5), wobei die erste Seitenwand (15) im Schnitt in einer Ebene liegt, die mit der Achse (X) in Richtung auf den oberen Abschnitt (4) konvergiert, die Bodenwand (14) im Schnitt im wesentlichen senkrecht zur ersten Seitenwand (15) ist und in einer Ebene liegt, die mit der Achse (X) in Richtung auf den unteren Abschnitt (5) konvergiert und die zweite Seitenwand (16) im Schnitt definiert ist in einer Ebene, die mit der Achse (X) in Richtung auf den oberen Abschnitt (4) konvergiert indem sie den Bereich des kleinsten Durchmessers der Bodenwand (14) mit dem unteren Abschnitt (5) verbindet.

4. Dichtungssystem (2) nach Anspruch 3, **dadurch gekennzeichnet, daß** die Ebene, in der die Bodenwand (14) liegt, im Schnitt einen Winkel zwischen 20° und 30° mit der Achse (X) bildet.

5. Dichtungssystem (2) nach Anspruch 3, **dadurch gekennzeichnet, daß** die Ebene in welcher die erste Seitenwand (15) der Nut (11) liegt, mit der Achse (X) einen Winkel zwischen 25° und 35°, vorzugsweise 35° bildet.

6. Dichtungssystem (2) nach Anspruch 3, **dadurch gekennzeichnet, daß** der Winkel, der zwischen der ersten Seitenwand (15) der Nut (11) und der Bodenwand (14) definiert ist, zwischen 80° und 90°, vorzugsweise 85° beträgt.

7. Dichtungssystem (2) nach einem der vorangehenden Ansprüche, **dadurch gekennzeichnet, daß** der Mittelabschnitt (6) eine Fläche hat, die aufeinanderfolgend definiert ist durch eine erste Ringwand (18), die im Schnitt in einer Ebene liegt, die mit der Achse (X) in Richtung auf den unteren Abschnitt (5) konvergiert, und durch eine zweite Ringwand (20), die im Schnitt in einer Ebene parallel zur Achse (X) liegt und mit der ersten Seitenwand (15) der Nut (11) den Zahn (21) definiert, wobei der Durchmesser des Umfangs, auf dem die Spitze des Zahns (21) liegt, größer als der Durchmesser des Sitzes (7) ist.

8. Dichtungssystem (2) nach Anspruch 7, **dadurch gekennzeichnet, daß** die Spitze des Zahns (21) auf einem Umfang liegt, dessen Durchmesser größer als der größte Durchmesser des konisch erweiterten Abschnitts (12) ist.

9. Dichtungssystem (2) nach Anspruch 7, **dadurch gekennzeichnet, daß** die Spitze des Zahns (21) auf einem Umfang liegt, dessen Durchmesser kleiner als der größte Durchmesser des konisch erweiterten Abschnitts (12) ist.

## Revendications

1. Système d'étanchéité (2) pour un circuit dynamique liquide, le système d'étanchéité (2) interposé entre un corps principal (3) présentant une partie supérieure sensiblement cylindrique (4), une partie inférieure filetée (5) et une partie centrale (6) reliées entre lesdites parties supérieure et inférieure (4 et 5) et une embase (7) avec un filetage (8) à l'intérieur duquel ladite partie inférieure (5) dudit corps principal (3) est vissée ; ledit système d'étanchéité (2) comprenant une rainure annulaire (11), une partie évasée (12) au niveau de l'extrémité longitudinale de ladite embase (7) faisant face au dit corps principal (3) et une bague d'étanchéité (13) agencée dans ladite rainure (11) et compressible entre ladite partie évasée (12) et le fond (14) de ladite rainure (11) ; dans lequel ledit système d'étanchéité (2) comprend une dent (21) qui empêche ladite bague d'étanchéité (13) de glisser hors de ladite rainure (11) pendant l'opération de vissage, une surface intérieure (15) de ladite dent (21) agissant en tant que butée pour la bague d'étanchéité (13) qui présente une coupe circulaire, système d'étanchéité (2) **caractérisé**
**en ce que** le diamètre de la coupe de ladite bague d'étanchéité (13) est inférieur à la distance entre lesdites parois latérales (15 et 16) de ladite rainure (11) et est supérieur à la profondeur de ladite rainure (11) ;
et **en ce que** ladite bague d'étanchéité (13) tend à se déplacer vers le haut dans ladite rainure (11) vers ladite surface intérieure (15) alors que la partie inférieure (5) est vissée à l'intérieur dudit siège (7).

2. Système d'étanchéité (2) selon la revendication 1, **caractérisé en ce que** ladite partie évasée (12) est à un angle de 45° à 60° par rapport à un plan orthogonal par rapport au dit axe (X).

3. Système d'étanchéité (2) selon l'une quelconque des revendications précédentes, **caractérisé en ce que** ladite rainure (11) est définie par une première paroi latérale (15) proche de ladite partie supérieure (4), qui délimite ladite dent (21), de ladite paroi inférieure (14) et une seconde paroi latérale (16) proche de ladite partie inférieure (5) ; ladite première paroi latérale (15), en coupe, résidant dans un plan convergent avec ledit axe (X) vers la partie supérieure (4), ladite paroi inférieure (14), en coupe, étant sensiblement orthogonale par rapport à ladite première paroi latérale (15) et résidant dans un plan convergent avec ledit axe (X) vers ladite partie inférieure (5), et ladite seconde paroi latérale (16) étant définie, en coupe, dans un plan convergent avec ledit axe (X) vers ladite partie supérieure (4) **en ce qu'**il relie la région de diamètre minimal de ladite paroi inférieure (14) à ladite partie inférieure (5).

4. Système d'étanchéité (2) selon la revendication 3, **caractérisé en ce que** le plan dans lequel ladite paroi inférieure (14) repose, en coupe, définit un angle entre 20° et 30° avec ledit axe (X).

5. Système d'étanchéité (2) selon la revendication 3, **caractérisé en ce que** le plan dans lequel ladite première paroi latérale (15) de ladite rainure (11) repose, définit un angle entre 25° et 35°, et de préférence de 35° avec ledit axe (X).

6. Système d'étanchéité (2) selon la revendication 3, **caractérisé en ce que** l'angle défini entre ladite première paroi latérale (15) de ladite rainure (11) et ladite paroi inférieure (14) est entre 80° et 90°, de préférence 85°.

7. Système d'étanchéité (2) selon l'une quelconque des revendications précédentes, **caractérisé en ce que** ladite partie centrale (6) présente une zone définie en succession par une première paroi annulaire (18) qui, en coupe, repose dans un plan convergent avec ledit axe (X) vers ladite partie inférieure (5) et par une seconde paroi annulaire (20) qui, en coupe, repose dans un plan parallèle au dit axe (X) et définit ladite dent (21) avec la première paroi latérale (15) de ladite rainure (11) ; le diamètre de la périphérie sur laquelle la pointe de ladite dent (21) repose étant supérieur au diamètre de l'embase (7).

8. Système d'étanchéité (2) selon la revendication 7, **caractérisé en ce que** la pointe de ladite dent (21) repose sur une périphérie présentant un diamètre supérieur au diamètre maximal de ladite partie évasée (12).

9. Système d'étanchéité (2) selon la revendication 7, **caractérisé en ce que** la pointe de ladite dent (21) repose sur une périphérie présentant un diamètre inférieur au diamètre maximal de ladite partie évasée (12).
